# EUROPÄISCHE PATENTANMELDUNG

(11) **EP 1 354 741 A1**
(43) Veröffentlichungstag der Anmeldung: **22.10.2003**
(21) Anmeldenummer: 03005996.8
(22) Anmeldetag: 18.03.2003
(51) Int. Cl.: B60J 7/12

(54) **Kraftfahrzeug mit einem Verdeck**

(30) Priorität: 17.04.2002 DE 10216891
(71) Anmelder: Dr.Ing. h.c.F. Porsche Aktiengesellschaft, 70435 Stuttgart (DE)
(72) Erfinder: Fischer, Thomas, 72074 Tübingen (DE)

(57) **Zusammenfassung**

Ein derartiges Kraftfahrzeug, insbesondere Cabriolet, besitzt ein Verdeck (2), welches ein am Kraftfahrzeug bewegbar angelenktes Verdeckgestänge (14) mit einem heckseitigen Spannbügel (21) und einem am Verdeckgestänge (14) in Lage gehaltenen Verdeckbezug (11) aufweist, wobei der Spannbügel (21) um eine etwa horizontal verlaufende Schwenkachse (22) in eine etwa horizontale Spannstellung (Sp) und eine etwa aufrechte Montagestellung (Mt) verlagerbar ist.

Um den Spannbügel (21) in Montagestellung (Mt) sicher zu halten, ist ein Halteband (28) vorgesehen, welches am in Montagestellung (Mt) verlagerten Spannbügel (21) angreift und am Verdeck (2) oder am Kraftfahrzeug (3) festlegbar ist und so den Spannbügel (21) in der Montagestellung (Mt) hält.

## Beschreibung

Bei der Erfindung wird ausgegangen von einem Kraftfahrzeug mit einem Verdeck, gemäß Oberbegriff des Anspruchs 1.

Ein Kraftfahrzeug der eingangs genannten Art ist aus der DE 44 41 666 C1 bekannt. Es besitzt ein Verdeck, welches ein am Fahrzeug bewegbar angelenktes Verdeckgestänge aufweist, welches u. a. einen heckseitigen Spannbügel besitzt. Ferner umfasst das Verdeck einen am Verdeckgestänge in Lage gehaltenen Verdeckbezug. In Schließstellung überspannt das Verdeck einen Fahrgastraum. Dabei nimmt der Spannbügel für eine ausreichende Spannung des Verdeckstoffes eine etwa horizontale Spannstellung ein. Insbesondere bei einem Kraftfahrzeug mit Mittelmotoranordnung kann bei in Schließstellung vorliegendem Verdeck der Zugang zu einem unterhalb des Spannbügels liegenden Motorraum erschwert sein. Um den Zugang zu erleichtern, kann bei dem bekannten Fahrzeug der Spannbügel um eine etwa horizontal verlaufenden Schwenkachse in eine etwa aufrechte Montagestellung geklappt werden.

Aufgabe der Erfindung ist es, bei einem Fahrzeug der gattungsbildenden Art die Montagestellung des Spannbügels zu verbessern.

Gelöst wird diese Aufgabe mit einem Kraftfahrzeug, welches die in Anspruch 1 genannten Merkmale umfasst. Weitere, die Erfindung ausgestaltende Merkmale sind in den Unteransprüchen angegeben.

Die mit der Erfindung hauptsächlich erzielten Vorteile sind darin zu sehen, dass der Spannbügel in der Montagestellung gegen ein ungewolltes Zurückklappen sicherbar ist, wodurch sich die Wartung des Fahrzeugs vereinfacht bzw. Reparaturen bequem und ggf. Arbeiten am Verdeck möglich sind. Überdies wird das Halten des Spannbügels in vorzugsweise aufrechter Montagestellung durch sehr einfache und daher kostengünstige Mittel erreicht. Änderungen am Verdeckgestänge sind nicht notwendig. Selbstverständlich ist das erfindungsgemäße Halteband nicht nur für ein Verdeck bei einem Fahrzeug mit Mittelmotor vorteilhaft verwendbar, vielmehr bietet der in Montagestellung verlagerbare Spannbügel einen leichten Zugang zu übrigen, beispielsweise innenliegenden, Verdeckteilen bei in Schließstellung angeordnetem Verdeck. Das Halteband ist mithin auch bei einem Verdeck für ein Fahrzeug mit Front- oder Heckmotor einsetzbar.

Bei einem Ausführungsbeispiel nach Anspruch 2 ist das Halteband mit seinem ersten Ende am Fahrzeug unterhalb des Spannbügels befestigt. In Montagestellung des Spannbügels wird das Halteband um den Spannbügel herumgeführt und hält diesen in der Montagestellung, die auch als Servicestellung bezeichnet werden kann.

In einer in Anspruch 3 angegebenen Ausführungsform kann das erste Ende des Haltebandes an einer Verdecklagerkonsole befestigt sein, an der ferner das Verdeckgestänge bewegbar gelagert ist. Alternativ kann es nach Anspruch 4 vorgesehen sein, das erste Ende des Haltebandes direkt am Spannbügel zu befestigen.

In einer Weiterbildung der Erfindung entsprechend Anspruch 5 besitzt das zweite Ende des Haltebandes eine Befestigungseinrichtung, vorzugsweise in Form einer Schlaufe oder Öse, so dass dieses zweite Ende am Verdeck oder am Fahrzeug durch Einhängen festlegbar ist, um den Spannbügel in der Montagestellung zu sichern. Beispielsweise kann die Schlaufe bzw. Öse am Verschlusshaken oder einem Zentrierstift eingehängt werden, welcher Verschlusshaken bzw. Zentrierstift am vorderen Ende des Verdeckes angeordnet ist und mit dem Windschutzscheibenrahmen zusammenwirkt.

Um die Funktion des Verdecks, also das Öffnen und Schließen nicht zu beeinflussen, wird in bevorzugter Ausführungsform nach Anspruch 6 das Halteband am Spannbügel in Ruhelage lösbar gehalten. Dies kann beispielsweise mit dem in Anspruch 7 genannten Klettband erreicht werden, das am Spannbügel und/oder am Halteband selbst angeordnet ist. Somit ist das Halteband beliebig oft einsetzbar und kann in Ruhelage sicher verstaut werden. Beispielsweise ist das Halteband gemäß Anspruch 8 insbesondere entlang des Spannbügels lösbar in Lage gehalten.

Die Länge des Haltebandes ist entsprechend der Lage einer am Verdeck oder Fahrzeug angeordneten Befestigungsstelle gewählt. Soll das Halteband an dem vorstehenden erwähnten Zentrierelement bzw. Verschlusshaken festgelegt, ist die Länge des Haltebandes so bemessen, das es bis an das vordere Verdeckende reicht.

Die Erfindung wird nachfolgend anhand von Ausführungsbeispielen mit Bezug auf die Zeichnung näher erläutert.

Es zeigen:
- Fig. 1: ein teilweise dargestelltes Kraftfahrzeug mit einem Verdeck,
- Fig. 2: das Verdeckgestänge mit in Spannstellung befindlichem Spannbügel,
- Fig. 3: das Verdeckgestänge gemäß Fig. 2 mit in Montagestellung gehaltenem Spannbügel und
- Fig. 4: einen Abschnitt des Spannbügels in einer perspektivischen Ansicht.

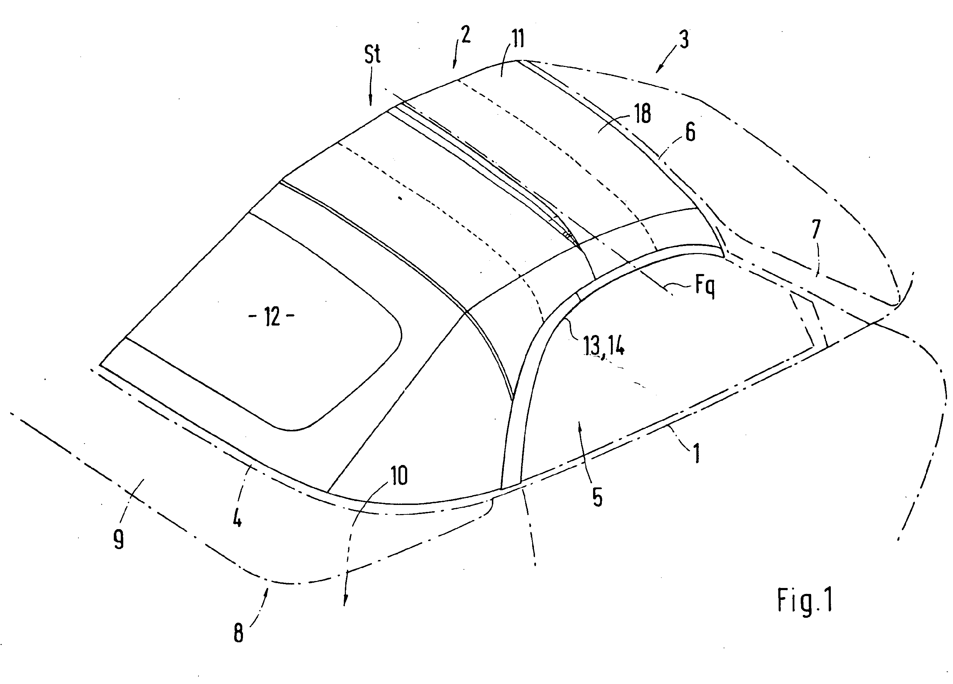

Fig. 1 zeigt oberhalb einer Gürtellinie 1 des Fahrzeugaufbaus ein Verdeck 2 für ein Kraftfahrzeug 3, das symmetrisch zu der Fahrzeugmittellängsebene ausgebildet ist. In Fig. 1 ist die Schließstellung St des Verdecks 2 widergegeben, in der es sich von einem Heckbereich 4 über einen Fahrgastraum 5 bis zu einem vorderen Rahmenquerteil 6 eines Windschutzscheibenrahmens 7 erstreckt. In Öffnungsstellung ist das Verdeck 2 in einen heckseitigen Ablageraum 8 verlagerbar, der von einem beweglichen Verdeckkastendeckel 9 nach oben hin verschlossen und freigegeben wird. Von dem Verdeck 2 ist in Fig. 1 neben dem Verdeckbezug 11, in dem eine, ggf. starre, Heckscheibe 12 angeordnet ist, noch ein seitlicher Dachrahmen 13 eines Verdeckgestänges 14 zu sehen, an dem der Verdeckbezug 11 in Lage gehalten ist. Bei dem Kraftfahrzeug 3 handelt es sich insbesondere um einen zweisitzigen Personenwagen mit Mittelmotoranordnung, bei dem das Antriebsaggregat unmittelbar hinter dem Fahrgastraum 5 liegt und beispielsweise unterhalb des Verdeckkastens 8 in einem Motorraum 10 angeordnet ist.

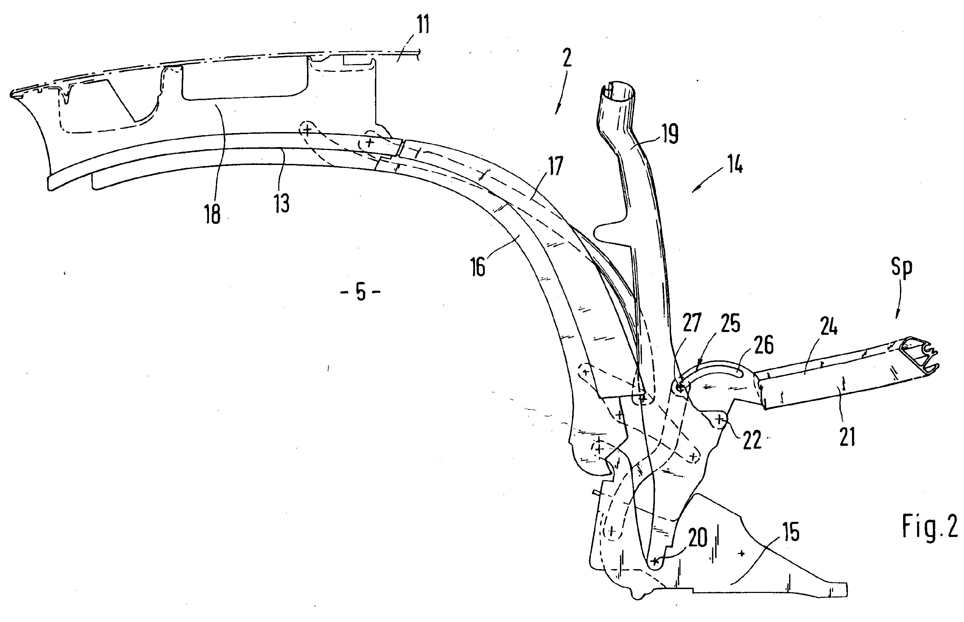

Das Verdeckgestänge 14 ist am Kraftfahrzeug 3, insbesondere an dessen Aufbau, an einer Verdecklagerkonsole 15 (Fig. 2) bewegbar gelagert. Das Verdeckgestänge 14 besitzt mehrere Lenker 16, 17, die ein Gelenkviereck bilden können, das einerseits an der Verdecklagerkonsole 15 bzw. an übrigen Teilen des Verdeckgestänges und andererseits an einem formstabilen Dachteil 18 schwenkbar angelenkt ist. Ferner umfasst das Verdeckgestänge 14 einen querverlaufenden Spriegel 19, beispielsweise Hauptspriegel, der in einer Schwenkachse 20 mit der Verdecklagerkonsole 15 verbunden ist. Neben weiteren, hier nicht näher beschriebenen Hebeln bzw. Lenkern umfasst das Verdeckgestänge 14 außerdem einen heckseitigen Spannbügel 21, der um eine etwa horizontale, etwa parallel und mit Abstand zur Fahrzeugquerachse Fq verlaufende Schwenkachse 22 bewegbar gehalten ist. Der Spannbügel 21 ist insbesondere U - förmig geformt und besitzt daher eine Spannbügelbasis 23 sowie davon ausgehende Spannbügelschenkel, von denen jedoch nur ein Schenkel 24 dargestellt ist. An den Schenkelenden liegt die Schwenkachse 22.

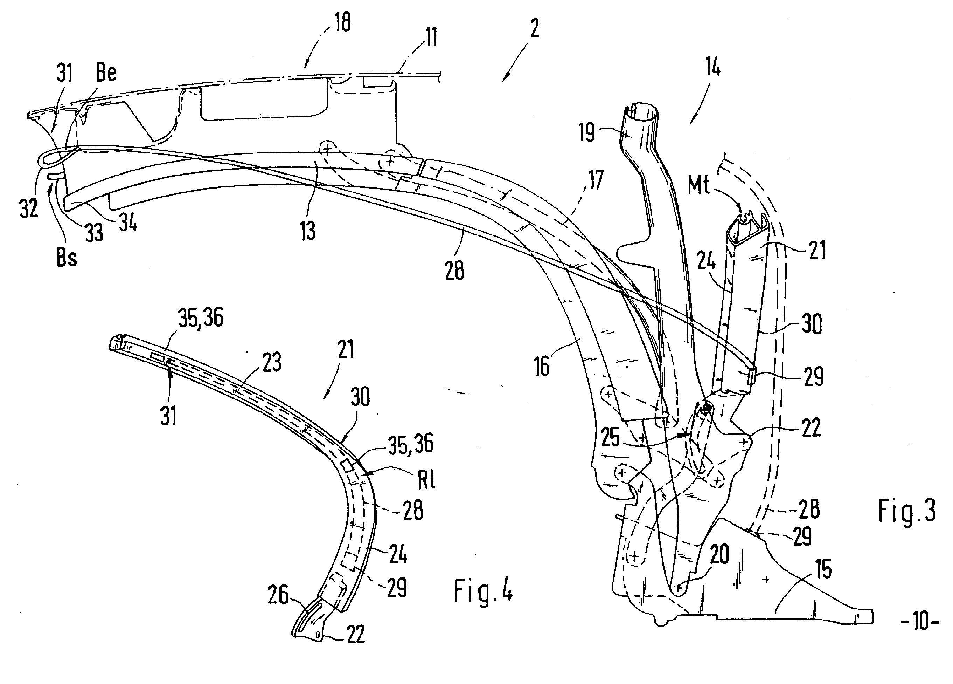

Der Spannbügel 21 ist aus seiner in Fig. 2 dargestellten Spannstellung Sp, in der er etwa horizontal vorliegt und dabei den Verdeckbezug 11 spannt, in seine in Fig. 3 widergegebene Montagestellung Mt verlagerbar. Die Montagestellung Mt des Spannbügels 21 liegt oberhalb der Spannstellung Sp. Ausgehend von der Spannstellung Sp wird der Spannbügel 21 um seine Schwenkachse 22 entgegen der Fahrtrichtung Fr nach oben in die beispielsweise aufrechte Montagestellung Mt geklappt. Dabei wird er mit einer Steuerung 25 geführt, die eine gebogen verlaufende Führungsbahn 26 und einen Führungsbolzen 27 umfasst, der in die Führungsbahn 26 eingreift.

Um den Spannbügel 21 in seiner Montagestellung Mt zu halten, ist ein Halteband 28 vorgesehen, welches in einem Ausführungsbeispiel mit seinem ersten Ende 29 am Spannbügel 21, insbesondere an dessen Unterseite 30 befestigt ist. Mit seinem zweiten Ende 31 wird das Halteband an einer Befestigungsstelle Bs am Verdeck 2 oder am Kraftfahrzeug 3 mit einer am zweiten Ende 31 angeordneten Befestigungseinrichtung Be festgelegt, wobei die Befestigungsstelle Bs oberhalb der Schwenkachse 22 liegt. Die Länge des Haltebandes 28 ist insbesondere darauf abgestimmt, welche Lage die Befestigungsstelle Bs am Verdeck 2 bzw. Kraftfahrzeug 3 bezüglich des ersten Endes 29 einnimmt. Die Länge des Haltebandes 28 kann auch einstellbar sein. Im gezeigten Ausführungsbeispiel besitzt das Halteband 28 an seinem zweiten Ende 31 als Befestigungseinrichtung Be eine Schlaufe bzw. Öse 32, mit der es an einem Zentrierbolzen 33 eingehängt werden kann, der die Befestigungsstelle Bs bildet. Der Zentrierbolzen 33 ist am vorderen Verdeckende 34 vorgesehen und wirkt in Schließstellung St mit dem Rahmenquerteil 6 des Windschutzscheibenrahmens zur Verdeckzentrierung zusammen.

Nach einem anderen Ausführungsbeispiel kann das erste Ende 29 des Haltebandes 28 am Kraftfahrzeug 3, insbesondere an der Verdecklagerkonsole 15 oder ggf. auch an dem Verdeckgestänge 14 befestigt sein, wie es gestrichelt in Fig. 3 angedeutet ist. Der Befestigungspunkt für das erste Ende 29 liegt unterhalb des Spannbügels 21 bzw. unterhalb der Schwenkachse 22. In Montagestellung Mt wird dabei das Halteband 28 um den Spannbügel 28 außen herumgeführt und kann mit seiner Öse 32 am Zentrierbolzen 33 eingehängt werden.

Unabhängig von dem gewählten Befestigungspunkt des ersten Endes 29 greift das Halteband 28 am Spannbügel 21 an, in dem es direkt am Spannbügel 21 befestigt ist, beispielsweise mit seinem ersten Ende 29, oder in dem es um den Spannbügel 21 herumgelegt wird. Außerdem wird das Halteband 28 am Fahrzeug oder Verdeck 2 mit seinem zweiten Ende 31 festgelegt, beispielsweise eingehängt, so dass der Spannbügel 21 in Montagestellung Mt gehalten wird.

Gemäß Fig. 4 wird das Halteband 28 in seiner Ruhelage RI an der Unterseite 30 entlang der gebogenen Form des Spannbügels 21 in Lage gehalten, so dass es beim Öffnen und Schließen des Verdecks 2 nicht mit dem Verdeckgestänge 14 verklemmt. Für das Fixieren des Haltebandes 28 in Ruhelage RI kann wenigstens eine lösbare Befestigungseinrichtung 35 vorgesehen sein, die beispielsweise als Klettband 36 ausgeführt ist. An dem Klettband kann das insbesondere aus Stofffasern gefertigte Halteband 28 fixiert werden. Es können an der Unterseite 30 über die Erstreckung des Spannbügels 21 verteilt mehrere Befestigungseinrichtungen 35 vorgesehen sein, um das Halteband 28 an dem gekrümmten Spannbügel 21 zu halten.

## Patentansprüche

1. Kraftfahrzeug mit einem Verdeck umfassend ein am Kraftfahrzeug bewegbar angelenktes Verdeckgestänge mit einem heckseitigen Spannbügel und einem am Verdeckgestänge in Lage gehaltenen Verdeckbezug, wobei der Spannbügel um eine etwa horizontal verlaufende Schwenkachse in eine etwa horizontale Spannstellung und eine etwa aufrechte Montagestellung verlagerbar ist, **gekennzeichnet durch** ein Halteband (28), welches am in Montagestellung (Mt) verlagerten Spannbügel (21) angreift und am Verdeck (2) oder am Kraftfahrzeug (3) festlegbar ist und so den Spannbügel (21) in der Montagestellung (Mt) hält.

2. Kraftfahrzeug nach Anspruch 1, **dadurch gekennzeichnet, dass** das Halteband (28) mit einem ersten Ende (29) am Kraftfahrzeug (3) unterhalb des Spannbügels (21) befestigt ist.

3. Kraftfahrzeug nach Anspruch 2, **dadurch gekennzeichnet, dass** das Halteband (28) mit dem ersten Ende (29) an einer Verdecklagerkonsole (15) befestigt ist.

4. Kraftfahrzeug nach Anspruch 1, **dadurch gekennzeichnet, dass** das Halteband (28) mit dem ersten Ende (29) am Spannbügel (21) befestigt ist.

5. Kraftfahrzeug nach einem der vorhergehenden Ansprüche, **dadurch gekennzeichnet, dass** ein zweites Ende (31) des Haltebandes (28) eine Befestigungseinrichtung (Be), vorzugsweise in Form einer Schlaufe oder Öse (32) aufweist.

6. Kraftfahrzeug nach einem der vorhergehenden Ansprüche, **dadurch gekennzeichnet, dass** das Halteband (28) am Spannbügel (21) in Ruhelage (RI) lösbar gehalten ist.

7. Kraftfahrzeug nach Anspruch 6, **dadurch gekennzeichnet, dass** das Halteband (28) mittels Klettband (36) am Spannbügel (21) gehalten ist.

8. Kraftfahrzeug nach Anspruch 6 oder 7, **dadurch gekennzeichnet, dass** das Halteband (28) in Ruhelage (RI) entlang des gekrümmten Spannbügels (21) lösbar in Lage gehalten ist.

9. Kraftfahrzeug nach Anspruch 1, **dadurch gekennzeichnet, dass** das Kraftfahrzeug (3) und/oder das Verdeck (2) eine Befestigungsstelle (Bs) aufweist, an der das Halteband (28) mit seinem zweiten Ende (31) festlegbar ist.
